# EUROPEAN PATENT APPLICATION

(11) **EP 3 838 994 A1**
(43) Date of publication of application: **23.06.2021**
(21) Application number: 20215963.8
(22) Date of filing: 21.12.2020
(51) Int. Cl.: C09D 11/037, C09D 11/50

(54) **AN INK RECIPE COMPOSITION FOR PRINTING A MULTI-COLOR IMAGE IN A SECURITY ELEMENT ON A SUBSTRATE, WHICH ELEMENT IS VISIBLE BOTH IN THE WAVELENGTH RANGE OF VISIBLE LIGHT (VIS) AND IN THE WAVELENGTH RANGE OF ULTRAVIOLET LIGHT (UV), A METHOD OF PREPARATION OF A SYSTEM WITH SUCH SECURITY ELEMENT ON A SUBSTRATE AND A SYSTEM TO BE USED AS A SECURITY OR IDENTIFICATION FEATURE OF THE OBJECT MARKED WITH SUCH SYSTEM**

(30) Priority: 20.12.2019 PL 43229319
(71) Applicant: Polska Wytwornia Papierow Wartosciowych S.A., 00-222 Warszawa (PL)
(72) Inventor: MOLGA, Edyta, 00-222 Warszawa (PL); BIERNACKI, Ariel, 00-222 Warszawa (PL); GAWEL, Kamil, 00-222 Warszawa (PL)
(74) Representative: Patpol Kancelaria Patentowa Sp. z o.o.

(57) **Abstract**

The present invention relates to an ink formulation composition for printing a multicolour picture in security elements applied on a substrate, visible both in the visible spectrum (VIS) wavelengths and in the ultraviolet light (UV) wavelengths, comprising at least one (p≥1) first colourant and at least one (q≥1) second colourant different from the first colourant, wherein the first colourant is capable of absorbing radiation in a first absorption range, the first absorption range (Δλ_{UV}) being located in the ultraviolet light range (B_{UV}), and the second colourant is capable of absorbing radiation in a second absorption range (ΔX_{VIS}) located in the visible light range (B_{VIS}), wherein the first colourant (B_{UV}) is a colourant which absorbs light in the ultraviolet light range (λ_{UV}) and emits light in the visible light range with a first wavelength (λ_{UV-VIS}) located in the said second absorption range (ΔX_{VIS}) of the second colourant, which absorbs light in the visible light range (B_{VIS}) with a second wavelength (λ_{VISa}), wherein the at least one second colourant which absorbs light in the visible light range (B_{VIS}) is capable of laser discolouration which alters spectral characteristics of the second colourant (B_{VIS}) in a wavelength range of absorbed visible light (λ_{VISa}) from an initial value (λ_{VISa'}) to a final value (λ_{VISa"}) located in the second absorption range (Δλ_{VIS}) to provide an engraved multicolour picture in the security element applied onto the substrate. The present invention provides also a process for the preparation of a system including the security element on the substrate, as well as the system as such designed to be used as a security or identification feature of the object marked with the system. Additionally, the present invention relates to a method of authentication of the object provided with the system to be used as a security or identification feature.

## Description

The present invention relates to an ink formulation composition for printing a multicolour picture in security elements applied on a substrate and visible both in the visible spectrum (VIS) wavelengths and in the ultraviolet light (UV) wavelengths, comprising at least one (p≥1) first colourant and at least one (q≥1) second colourant different from the first colourant, wherein the first colourant is capable of absorbing radiation in a first absorption range, the first absorption range (Δλ_{UV}) being located in the ultraviolet light range (Buv), and the second colourant is capable of absorbing radiation in a second absorption range (Δλ_{VIS}) located in the visible light range (B_{VIS}), wherein the first colourant (Buv) is a colourant which absorbs light in the ultraviolet light range (λ_{UV}) and which emits light in the visible light range with a first wavelength (λ_{UV-VIS}) located in the said second absorption range (Δλ_{VIS}) of the second colourant which absorbs light in the visible light range (B_{VIS}) with a second wavelength (λ_{VISa}), wherein the at least one second colourant which absorbs light in the visible light range (B_{VIS}) is capable of laser discolouration which alters spectral characteristics of the second colourant (B_{VIS}) in a wavelength range of absorbed visible light (λ_{VISa}) from an initial value (λ_{VISa'}) to a final value (λ_{VISa"}) located in the second absorption range (Δλ_{VIS}) to provide an engraved multicolour picture in a security element applied onto the substrate. The present invention provides also a process for the preparation of a system including the security element on the substrate, as well as the system as such designed to be used as a security or identification feature of the object marked with the system. Moreover, the present invention discloses also a method of authentication of the object provided with the system to be used as a security or identification feature.

Identification documents which constitute confirmation of existence of specific rights, legal relationships, as well as acts of law expressed on specific data media, are at the present moment an indispensable element of life in the developed countries. Their significance grows continuously, as identification documents are widely applicable, and their number is ever-growing. For instance, said documents can be used for establishing person's identity (identity documents and passports), authorizing a person to conduct particular actions (e.g. a driving license; or a membership card which confirms specific powers such as admittance to the bar or patent agent rights), access authorization to some areas (e.g. identification/accession cards) or authorizations to conduct credit transactions (e.g. credit cards). Such a document usually includes a particular substrate, such as a paper or a polymer substrate, with a security indication applied thereon, and protected additionally by a plastic sheet, such as for instance by laminating the substrate with a plastic sheet or, usually, by substrate being sandwich-laminated with plastic sheets, or by applying an additional protective coating, such as for instance a varnish coating.

It is essential that the substrate with the security element applied thereon is additionally protected with a protective coating, providing consequently the longest life of the document possible and hindering potential manipulations. Apart of the above-mentioned benefits, applying said security element at the early phase of production makes it possible to use both centralized and decentralized personalization, which is beneficial for both a provider and issuer of the document.

In the light of ever-growing universal use of such documents, it is essential that a person relying on a specific identification document has the greatest confidence, preferably certainty that the identification document was not altered and/or forged. Thus, to prevent their forgary, falsification or unauthorized copying, documents are provided with a number of security features to prevent non-authentic document from entering the market. The examples of typical security features used to this end include: printouts, including relief printouts, protective threads or strips, windows, fibres, planchettes, films, stickers, holograms, watermarks, palpable security features, protective inks, security elements comprising optically variable, magnetic or magnetizable pigments, thin-layer interference pigments, interference-layer-coated particles, thermochromic pigments, photochromic pigments, luminescent compounds, compounds absorbing in the infrared or ultraviolet radiation range, or magnetic protections. Moreover, documents such as passports, identity documents or payment cards or means include usually security elements and/or marks which employ security features of more than one type.

Similar effect and needs are noticeable in case of commodity turnover, and not only luxury goods, but also objects of daily use, wherein it is more and more common to individually mark all batches of goods or individual commodity labels, packages, and similar security features. As in the case of the above-mentioned documents, they include usually a specific substrate, such as a paper or polymer substrate often with a security marking applied thereon and additionally protected by a plastic sheet. In such a case a security level is required to guarantee not only certainty concerning origin of the commodity from a specific manufacturer, but also, in the case of goods such as medical goods, safety of their marketing and use.

Thereby, any forging of such security features being present both on documents and other goods, including falsification and issuing identification documents by unauthorized persons, is a significant security issue.

One of the methods of preventing forgeries is introducing numerous restrictions and a partial access control to materials and equipment for the manufacture of such security features. However, introduction of a strict access control and monitoring of material turnover is unpractical and impossible to accomplish.

Therefore, instead of introducing still new and more restrictive legal and administrative limits, security elements which are new and harder to forge, methods for the manufacture thereof and products requisite for the manufacture thereof are still sought.

One of the proposed attempts to struggle with forged goods is to seek so-called "integrated verification functions" employing more than one security feature in a single security element. Such verification functions, in view of their recognizability, could be divided into two broad categories depending on the security feature being visible by the unaided eye or not. An advantage of security features visible by the unaided eye is that they could be inspected without a special equipment. However, unceasing progress of civilization, which entails emerging and development of still more new technologies enabling copying and processing security features visible by the unaided eye, reduced capability of using visible verification features as a security element, since for the majority of the visually verifiable features suspicion arises that they can be easily forged with modern copying techniques.

These forces a continuous effort aimed at perfection of the security elements used and utilizing many types security features in a single document. However, a portion of the known, developed so far, combined integrated security features is rather expensive due to a cost of their incorporation, and thus may be incorporated only to protect selected, exclusive and expensive on the one hand, or providing specific rights or guaranties of the goods.

Integrating still new security features into documents and securities generates restrictions and hindrances for forgers, who would try to bring any altered or forged products into the market.

That is why works are still under way to provide an effective and available, and inexpensive security element comprising "integrated verification functions". Among other things, while searching for such security features with a higher degree of security, demand has significantly grown for "invisible" verification functions, meaning the ones which are not inspected by an unaided, i.e. not equipped with any equipment, human eye in natural light only. Such features can include printed characters which absorb or emit light at invisible wavelengths only, and which are readable by devices capable of illuminating the security element on the substrate with suitable human-eye-invisible radiation and providing readout of the results. However, use of such security features requires issuers or manufacturers of other articles provided with security elements, and all the more controlling stations, to be equipped with expensive and complicated detectors. Therefore it is more reasonable (regarding the issue of providing security at all steps of use or turnover of a protected document) to introduce such security elements, verification of which does not require significant financial expenditure, is fast, unequivocal, and is not based on technical knowledge.

In this connection, it is usually recommended to use as an invisible verification function one or more of security elements with different characteristics, along with security elements visible with the unaided eye. Among the invisible security elements, special attention should be given to those employing security features, including materials visible in UV light, including fluorescent or phosphorescent materials. They have one additional advantage, since invisible light sources required for the features to be observed, are usually simple ultraviolet bulbs or lamps which emit radiation w the range of near ultraviolet with a wavelength in the range of about 280 do about 400 nm. Additionally, such bulbs or lamps are readily available, inexpensive and unfailing. Moreover, such sources emit also some visible light, which makes identification of its failure easy and instantaneous, and consequently a risk of accidental rejection of an important identification document or correct article due to reading device's failure is minimized.

Use of such fluorescent or phosphorescent materials for the manufacture of security elements in documents was disclosed in numerous patent publications. For example, the documents US4151667 and US4219599 describe laminated documents, such as identity documents, which employ a phosphorescent material for the manufacture of a security element comprising a verification or validation pattern. Next, the publication US4387112 discloses identification documents, which can be verified as the authentic ones by use of inorganic luminophore compositions in a security element. The subsequent patent publication US5005873 describes, however, a substrate provided with a designation which is obtained with at least two different fluorescent materials characterized by diversified emission spectra in the ultraviolet range and different emission spectra in the visible light range, and use of said systems as security elements in identification documents. On the other hand, the patent document US4500116 characterizes an identification document, such as a passport or identity card, provided with a phosphorescent composition, which includes at least two phosphoresce activators, which secure obtaining different emission characteristics in respect to both a wavelength, and effect duration, and as a result the composition, when irradiated with light wavelength within the UV length range, changes its color initially, thus securing a change of the mark color, e.g. from green to blue.

In turn, the application publication WO2005062692 discloses a security element for securities and security documents, such as banknotes, passports, cards, identity documents and the like, the security element comprising a multicolour picture of various proportions, which is invisible under normal conditions of conventional illumination, but its visualization only follows exposition of the security element to the electromagnetic radiation of the specific wavelength. This leads to a situation, where within the limits of one security element the colour of the hidden picture changes only when irradiated with light of different wavelengths, for instance with visible light on the first side, and ultraviolet light on the other side. In this way, on the protested paper different structures can be displayed, which are alternatingly visible depending on a wavelength of electromagnetic radiation used to illuminate the security element. However, obtaining a multicolour picture requires applying more than one ink composition, a printing ink in particular, and observation of colours changeability requires using radiation of a specific wavelength to provide a colour change in the hidden picture. Thus, applicability of such a security feature is limited, due to the security element lacking universal capacity.

However, any of the above-mentioned documents do not give a desired effect of providing a security element comprising a component, which absorbs light of a wavelength in the UV length range to enable verification of genuineness of an article, including in particular a document, and preferably an identity document, both in the visible light range, and after exposing the security item to UV light.

A combined security item, which utilizes simultaneously security features visible both in visible light and in UV light, discloses e.g. patent specification US6155168, where an identity document is described, which includes a photographic portrait perceptible with the naked eye in VIS light and a photographic portrait printed with fluorescent UV inks. However, such a standard combined security item is typically prepared in a multi-step process by the use of at least two different ink compositions. Moreover, the picture obtained is a result of a method of overprinting the document. Additionally, a simple combination of two security function within one security element does not also enhance significantly the security level. Emission spectra of commercially available colourants (dyes or pigments) are well known to persons skilled in the art, and thereby can be easily identified by a forger suspecting their use for protecting genuineness of an article. That is why, even if two or more of the typical dyes or pigments are used in combination, e.g. to create two patterns within one security element on a substrate, forgers can buy them and prepare an adequate mixture thereof to mimic such a security element. Thereby, there is still an actual need to provide a security element which is hard to forge, easy to manufacture and to identify as authentic one, preferably without a need to use an unwieldy and/or complicated or expensive equipment.

Indeed, the subsequent patent publication WO2008118863 discloses a kit of colourants used for printing comprising a first colourant capable of absorbing invisible radiation and shifting a wavelength of said invisible radiation to radiation of a first wavelength in the visible light range and a second colourant capable of absorbing invisible radiation and shifting a wavelength of said invisible radiation to radiation of a second wavelength in the visible light range, wherein the first visible wavelength and the second visible wavelength are two different waves perceived by an observer as two different hues, but certainly it is not easy to prepare it. According to the specification, both first colourant and the second colourant can be colourants capable of absorbing radiation in the ultraviolet light range. In one embodiment of the solution described in said publication a kit of colourants may additionally include a colourant, which reflects radiation in the visible light range and provides a colour reflecting visible light, which is traditionally utilized in printing industry. However, even in this solution, like in other prior art solutions, the multi-colour picture visible only after exposition to light with a wavelength beyond the visible light range is a result of the method of printing the picture comprising the security element. According to the specification, to create a picture, the first and subsequent colourants are included in separate carriers aimed at a selected method of applying, in particular ink-jet printing or a toner. A method for printing a multi-colour picture on a substrate, as disclosed in the description, comprises printing the first colourant on the substrate, and then printing the second dye on the substrate. Thus, to obtain a more complicated multi-colour picture, the method as disclosed in the description of WO2008118863 comprises numerous consecutive steps of printing on the substrate.

The present inventors found unexpectedly, that security provided by a security item utilizing security elements both invisible and visible in the visible light range can be increased by a composition of the present invention and a modification made by applying onto a composition on a substrate a marking with laser radiation in the visible light range, to thereby obtain a personalized security element distinctive for the given product, enhancing thereby significantly turnout security of the product.

The solution proposed by the inventors provides a security element comprising a multicolour picture or marking, which can be manufactured by a skilled person in an easy process, by employing a simple ink composition or ink compositions of the present invention and a single step of laser engraving, the security element not requiring, for verification of its authenticity, utilizing neither particular conditions nor an expensive and generally unavailable instrumentation. For more complex security items providing the multi-colour effect, whether in the visible light or UV range, more than 1 step of laser engraving may be employed, the steps utilizing different lasers which emit beams of a wavelength different from each other. The security item obtained in the process are characterized by a particularly high degree of security and personalization. Moreover, by the use of the composition of the present invention it is possible to provide a substrate with the composition applied thereon, which could be być personalized or individualized at a later stage by laser engraving. Any of the inventions known so far concerning easy and simply identifiable security elements does not provide a solution, which would secure specific security features, which would enable later introduction, in a simple and uncomplicated way, identificating features, which would personalize a commodity or commodity lots. Such a solution is highly desirable due to the fact that, when a system for the final recipient is possible which provides exceptional security features of goods marked with that system, however enabling its further personalization in an additional step by a recipient of the system interested in introducing such a security item, novel and highly sought possibilities appear. Additionally, a system prepared in this way can be then easily secures by an additional layer, for example, by lamination or lacquering, both before and immediately after a picture or marking has been engraved, the engraving being conducted on a dried system comprising a substrate with an ink composition or ink compositions applied thereon covering separate parts of the substrate the system is located on. Thus, according to the invention, it is possible to introduce a qualitatively novel product comprising a layered system for the manufacture of a security element on a substrate, in particular a system, which can comprise the last step of personalization of the security element of a initially prepared product at the last step of personalization even at a recipient's site.

Therefore, the present invention relates in the first place to an ink formulation composition for printing a multicolour picture in security elements applied on a substrate, which is visible both in the visible spectrum (VIS) wavelengths and in the ultraviolet light (UV) wavelengths, comprising at least one (p≥1) first colourant and at least one (q≥1) second colourant different from the first colourant, wherein the first colourant is capable of absorbing radiation in a first absorption range, the first absorption range (Δλ_{UV}) being located in the ultraviolet light range (Buv), and the second colourant is capable of absorbing radiation in a second absorption range (Δλ_{VIS}) located in the visible light range (B_{VIS}), wherein the first colourant (Buv) is a colourant which absorbs light in the ultraviolet light range (λ_{UV}) and which emits light in the visible light range with a first wavelength (λ_{UV-VIS}) located in the said second absorption range (Δλ_{VIS}) of the second colourant which absorbs light in the visible light range (B_{VIS}) with a second wavelength (λ_{VISa}), wherein the at least one second colourant which absorbs light in the visible light range (B_{VIS}) is capable of laser discolouration which alters spectral characteristics of the second colourant (B_{VIS}) in a wavelength range of absorbed visible light (λ_{VISa}) from an initial value (λ_{VISa'}) to a final value (λ_{VISa"}) located in the second absorption range (Δλ_{VIS}), to provide an engraved multicolour picture in the security element applied onto the substrate.

According to the preferred embodiment of the present invention, a composition of the invention comprises at least two or more (p≥2) of first colourants capable of absorbing radiation in the ultraviolet light range (B_{UVn n≥1}), each of which emits light with a first wavelength (λ_{UV-VISn, n≥1}), wherein the first wavelength (λ_{UV-VISx}) emitted by one of the first colourants capable of absorbing radiation in the ultraviolet light range (B_{UVx}) is different from the wavelength (λ_{UV-VISy, y≠x}) emitted by the remaining first colourants capable of absorbing radiation in the ultraviolet light range (B_{UVy, y≠x}).

More preferably, such a composition comprises two (p=2) first colourants capable of absorbing radiation in the ultraviolet light range (B_{UV1} and B_{UV2}), each of which emits light with a first wavelength (λ_{UV-VIS1} and λ_{UV-VIS2}), wherein one of the first wavelengths (λ_{UV-VIS1}) emitted by one of the first colourants capable of absorbing radiation in the ultraviolet light range (B_{UV1}) is different from the remaining first wavelengths (λ_{UV-VIS2}) emitted by the remaining first colourants capable of absorbing radiation in the ultraviolet light range (B_{UV2}).

Even more preferably, the composition comprises two or more (q≥2) of the second colourants capable of absorbing radiation in the visible light range (B_{VISn, n≥1}) and absorbing light emitted by the first colourant capable of absorbing radiation in the ultraviolet light range (B_{UVn, n≥1}) with a first wavelength (λ_{UV-VISn, n≥1}), each of said colourants absorbing light with a second wavelength (λ_{VISn, n≥1}), wherein the second wavelength (λ_{VISx}) absorbed by one of the second colourants capable of absorbing radiation in the visible light range (B_{VISx}) and absorbing light emitted by the first colourant capable of absorbing radiation in the ultraviolet light range (B_{UVx}) with a first wavelength (λ_{UV-VISx}) is different from the remaining second wavelengths (λ_{VISy, y≠x}) absorbed by the remaining of the second colourants capable of absorbing radiation in the visible light range (B_{VISy, y≠x}) and absorbing light emitted by the first colourant capable of absorbing radiation in the ultraviolet light range (B_{UVy, y≠x}) with a first wavelength (λ_{UV-VISy, y#x}).

Even more preferably, the composition comprises two (q=2) second colourants capable of absorbing radiation in the visible light range (B_{VIS1} and B_{VIS2}), each of which absorbs light with a second wavelength (λ_{VIS1 and} λ_{VIS2}), wherein one of the second wavelengths (λ_{VIS1}) absorbed by one of the second colourants capable of absorbing radiation in the visible light range (B_{VIS1}) is different from the remaining second wavelengths (λ_{VIS2}) absorbed by the remaining of the second colourants capable of absorbing radiation in the visible light range (B_{VIS2}).

In a particularly preferred embodiment, the composition comprises two (p=2) of the first colourants capable of absorbing radiation in the ultraviolet light range (B_{UV1} and B_{UV2}), each of which emits light with a first wavelength (λ_{UV-VIS1} and λ_{UV-VIS2}), and two (q≥2) of the second colourants capable of absorbing radiation in the visible light range (B_{VIS1} and B_{VIS2}), each of which absorbs light emitted by first colourant capable of absorbing radiation in the ultraviolet light range (B_{UV1} and B_{UV2}) with a first wavelength (λ_{UV-VIS1 and} λ_{UV-VIS2}), wherein one wavelength (λ_{UV-VIS1}) absorbed by one of the second colourants capable of absorbing radiation in the visible light range (B_{VIS1}) is different from a wavelength (λ_{UV-VIS2}) absorbed by the remaining of the second colourants capable of absorbing radiation in the visible light range (B_{VIS2}).

According to another embodiment, a composition of the present invention comprises precisely one first colourant capable of absorbing radiation in the ultraviolet light range (B_{UV1}) which absorbs light in a first range of ultraviolet light (Δλ_{UV}) with a first wavelength (λ_{UV1}) and emits light with a first wavelength (λ_{UV-VIS1}), and one second colourant capable of absorbing radiation in the visible light range (B_{VIS1}) in a second range of visible light (Δλ_{VIS}) with a second wavelength (λ_{VIS1}), wherein the first wavelength (λ_{UV-VIS1}) emitted by the first colourant capable of absorbing radiation in the ultraviolet light range (B_{UV1}) is comprised in a second range of visible light (Δλ_{VIS}), and the first wavelength (λ_{UV-VIS1}) and the second wavelength (λ_{VIS1}) may be the same or different.

According to another embodiment, a composition of the present invention comprises two first colourants capable of absorbing radiation in the ultraviolet light range (B_{UVn n≥1}), each of which emits light with a first wavelength (λ_{UV-VISn, n≥1}), wherein the first wavelength (λ_{UV-VISx}) emitted by one of the first colourants capable of absorbing radiation in the ultraviolet light range (B_{UVx}) is different from the wavelength (λ_{UV-VISy, y≠x}) emitted by the remaining first colourants capable of absorbing radiation in the ultraviolet light range (B_{UVy, y≠x}), and precisely one second colourant capable of absorbing radiation in a second absorption range (Δλ_{VIS}) located in the visible light range (B_{VIS}).

In a preferred embodiment, the first colourant emitting light in the ultraviolet light range (B_{UV}) is a fluorescent colourant selected from green fluorescent colourant, yellow fluorescent colourant, red fluorescent colourant and blue fluorescent colourant, for example available from the suppliers selected from Honeywell, Sicpa, Luminochem, STP, Rotoflex, Angstrom, Aralon, Nemoto.

The preferred second colourant absorbing VIS light is a colourant selected from the group consisting of red, yellow, blue and violet pigments of the parameter consistent with the Colour Index International selected from Pigment Red 57:1, Pigment Yellow 13, Pigment Yellow 81, Pigment Red 242, Pigment Red 146, Pigment Blue 15:4 or 15:3, Pigment Violet 23.

According to the preferred embodiment of a composition, the composition comprises additionally a base inert towards the colourants present in the composition, transparent in VIS light and inactive in ultraviolet UV light, preferably a UV-set base designed for offset print or an oxidative base enriched in a siccative, a UV-set base designed for the screen-printing, which is solvent- or water-based, available, for example, from suppliers selected from Printcolor, Pröll GmbH, Sericol, Sicpa, K&L, Gleitsmann, Sun Chemical, Huber Technology, Flint Group, RUCO and many others.

The present invention relates also to process for the preparation of a system including the security element on a substrate comprising the following steps:
a) applying onto a substrate, at least onto a part thereof, at least one ink composition of the present invention, wherein in the case of applying two or more compositions with different content of at least one of the colourants present in the composition, the compositions are applied onto different areas of the security element;
b) fixing the ink composition applied onto the substrate;
c) laser engraving the ink composition-modified substrate of the system containing the security element obtained at step b) with at least one laser emitting electromagnetic radiation having a wavelength λ_{L} which enables discolouration of at least one of the second VIS colourants from those present in the ink composition, the wavelength λ_{L} being selected from lengths between 380 - 700 nm.

At least part of the substrate, on which at least one ink composition of the present invention is applied, corresponds to this part of the substrate, on which a security element is desirably provided in the obtained system. A part of the substrate is not limited, and it may correspond to both the entire substrate and its small part(s), and also, when the security element is localized in different areas of the obtained system containing the security element on the substrate, a part of the substrate may correspond to several areas of the substrate, at which ink composition(s) of the invention is/are applied. Areas of the substrate creating such a security element may comprise only a part of the substrate, or else correspond globally to the entire substrate of the system. Different areas of the security element, both adjacent and comprising areas separated sufficiently to not be considered creating a common picture, may be coated with one or more ink compositions of the invention creating particular colour arrangements, which in turn may be additionally personalized by laser engraving.

Preferably, applying the ink composition onto the substrate in step a) is conducted by a print technology, preferably offset printing, flexographic printing or screen printing, most preferably by the offset printing or screen printing.

According to the preferred embodiment of the process of the present invention, the substrate, at which the ink composition is applied in step a), is selected from a paper substrate, polycarbonate substrate, polyvinyl chloride substrate, a polyester substrate or derivatives thereof.

Also preferably, the fixing conducted in step b) is conducted by radiation hardening with ultraviolet UV, by solvent evaporation, or else oxidative oxidation with addition of a siccative.

Preferably, step b) includes additionally coating the substrate modified by the fixed ink composition with a protective layer, which is transparent in the visible light range VIS and inactive in ultraviolet light UV.

In the preferred embodiment of the process of the invention, coating the substrate modified by the fixed ink composition with a protective layer, which is transparent in the visible light range VIS and inactive in ultraviolet light UV, is conducted by lamination or by applying a lacquer coat, in particular when the substrate is a paper substrate, it is preferred to apply a lacquer coat, and when the substrate is a polymer substrate, it is preferred to protect the system by lamination.

Preferably, the laser engraving is conducted with at least one laser operated at a frequency, power, beam sweep rate and pixel spacing, which do not degrade the substrate, preferably the frequency in the range of from 10 to 30 kHz, the power not exceeding 70%, the beam sweep rate of 300-600 mm/s and the pixel spacing of 30-60 µm.

More preferably, the laser engraving is conducted by applying two or three, respectively, electromagnetic radiations of different lengths emitted by a laser, wherein the first electromagnetic radiation with a first wavelength λ_{L1} emitted by a laser differs from a second wavelength λ_{L2} emitted by a laser, and differs from an optionally used third wavelength λ_{L3} emitted by a laser, wherein λ_{L1} ≠ λL₂≠ λL₃ are selected from within the visible light range of 380 -700 nm. Even more preferably, the laser engraving conducted by use of two wavelengths (λ_{L1} and λ_{L2}) or three wavelengths (λ_{L1}, λ_{L2} and λ_{L3}), respectively, of electromagnetic radiation emitted by a laser, is conducted in consecutive separate steps.

Also preferably, the laser engraving is conducted by use of at least one electromagnetic radiation of a wavelength λ_{L} emitted by a laser selected from a blue laser emitting radiation of a wavelength in the blue light range, for example 447 nm, a green laser emitting radiation of a wavelength in the green light range, for example 532 nm, and a red laser emitting radiation of a wavelength in the red light range, for example 671 nm. More preferably, the laser engraving is conducted by use of at least two electromagnetic radiations of wavelengths λ_{L1} and λ_{L2} emitted by a laser selected from radiation emitted by a blue laser emitting radiation of the length of 447 nm, a green laser emitting radiation of the length of 532 nm and a red laser emitting radiation of the length of 671 nm, wherein, in case of the two-step engraving comprising consecutive separate steps conducted by use of two different electromagnetic radiations λ_{L1} and λ_{L2} emitted by a laser, wherein λ_{L1}≠λ_{L2} and wherein each one of λ_{L1} and λ_{L2} is selected from radiation emitted by a blue laser emitting radiation of the length of 447 nm, a green laser emitting radiation of the length of 532 nm and a red laser emitting radiation of the length of 671 nm. Most preferably, the laser engraving is conducted by use of at least three electromagnetic radiations of wavelengths λ_{L1}, λ_{L2} and λ_{L3} emitted by a laser, selected from radiation emitted by a blue laser emitting radiation of the length of 447 nm, a green laser emitting radiation of the length of 532 nm and a red laser emitting radiation of the length of 671 nm, wherein, in case of the three-step engraving comprising consecutive separate steps conducted by use of three different electromagnetic radiations λ_{L1}, λ_{L2} and λ_{L3}, wherein λ_{L1}≠λ_{L2}≠λ_{L3}, emitted by a laser, each one of λ_{L1}, λ_{L2} and λ_{L3} is selected from radiation emitted by a blue laser emitting radiation of the length of 447 nm, a green laser emitting radiation of the length of 532 nm and a red laser emitting radiation of the length of 671 nm. According to the present description, radiation of a wavelength in the blue light range means radiation of a wavelength in the range of from 436 nm to 495 nm, preferably radiation of a wavelength in the range 427 nm to 467 nm, for example radiation of a wavelength of 447 nm. According to the present description, radiation of a wavelength in the green light range means radiation of a wavelength in the range of from 496 nm to 566 nm, preferably radiation of a wavelength in the range 517 nm to 557 nm, for example radiation of a wavelength of 532 nm. According to the present description, radiation of a wavelength in the green light range means radiation of a wavelength in the range of from 610 nm to 780 nm, preferably radiation of a wavelength in the range 610 nm to 740 nm, preferably 627 nm to 740 nm, for example radiation of a wavelength of 671 nm.

The present invention relates also to a system designed to be used as a security or identification feature of the object marked with the system, comprising a substrate and a security element applied onto a substrate visible both in the range of visible light wavelengths and in ultraviolet radiation characterized in that the security element is made by use of at least one ink formulation composition of the present invention to provide a graphic composition of a multicolour picture in the security element visible both in the visible spectrum (VIS) wavelengths and in the ultraviolet light (UV) wavelengths.

Preferably, the security element is made by use of precisely one ink formulation composition of the present invention comprising a first colourant capable of absorbing radiation in the ultraviolet light range (B_{UV1}) and a second colourant capable of absorbing radiation in the visible light range (B_{VIS1}). More preferably, security element is made by use of at least two different ink formulation compositions of the present invention different from each other by at least one from the first colourant capable of absorbing radiation in a first absorption range, the first absorption range (Δλ_{UV}) being located in the ultraviolet light range (B_{UV}), and from the second colourant capable of absorbing radiation in a second absorption range (Δλ_{VIS}) located in the visible light range (B_{VIS}). Even more preferably, the security element is made by use of two different ink formulation compositions, wherein the first ink formulation composition comprises a first colourant capable of absorbing radiation in the ultraviolet light range (B_{UV1}) and a second colourant capable of absorbing radiation in the visible light range (B_{VIS1}), and the second ink formulation composition comprises a first colourant capable of absorbing radiation in the ultraviolet light range (B_{UV2}) different (B_{UV2}≠B_{UV1}) from the first colourant capable of absorbing radiation in the ultraviolet light range (B_{UV1}) present in the first ink formulation composition (B_{UV1}) and a second colourant capable of absorbing radiation in the visible light range (B_{VIS1}) the same (B_{VIS1}=B_{VIS1}) as the second colourant capable of absorbing radiation in the visible light range (B_{VIS1}) present in the first ink formulation composition. Most preferably, the security element is made by use of two different ink formulation compositions, wherein a first ink formulation composition comprises a first colourant capable of absorbing radiation in the ultraviolet light range (B_{UV1}) and a second colourant capable of absorbing radiation in the visible light range (B_{VIS1}), and a second ink formulation composition comprises a first colourant capable of absorbing radiation in the ultraviolet light range (B_{UV2}) different (B_{UV2}≠B_{UV1}) from the first colourant capable of absorbing radiation in the ultraviolet light range (B_{UV1}) present in the first ink formulation composition (B_{UV1}) and the second colourant capable of absorbing radiation in the visible light range (B_{VIS2}) different (B_{VIS1}≠B_{VIS2}) from the second colourant capable of absorbing radiation in the visible light range (B_{VIS1}) present in the first ink formulation composition.

Preferably, the system of the present invention includes additionally a protective layer applied onto a security element-modified substrate, transparent in VIS light and inactive in ultraviolet UV light in the range of UV and VIS light, preferably a laminate layer or by applying a lacquer coat.

In a preferred practical embodiment of the invention, the substrate is selected from a paper substrate, a polycarbonate substrate, a polyvinyl chloride substrate, a polyester substrate or derivatives thereof.

Preferably, the system additionally comprises a graphic marking created by engraving the security element by electromagnetic radiation of at least one wavelength λ_{L} emitted by a laser, preferably at least two different electromagnetic radiations of lengths λ_{L1} and λ_{L2}, and most preferably three different electromagnetic radiations of lengths λ_{L1}, λ₁₂ and λ_{L3}, wherein the wavelength λ_{L1} of electromagnetic radiation is different from the wavelength λ₁₂ of electromagnetic radiation (λ_{L1} ≠ λ_{L2}), and the wavelength λ_{L3} of electromagnetic radiation is different both from the wavelength λ_{L1} of electromagnetic radiation and the wavelength λ_{L2} of electromagnetic radiation (λ_{L1} ≠ λ_{L2}≠ λ_{L3}).

More preferably, the graphic marking created by engraving the security element by electromagnetic radiation is made by use of two different electromagnetic radiations λ_{L1} and λ_{L2} emitted by a laser, wherein λ_{L1}≠λ_{L2} and wherein each one of λ_{L1} and λ_{L2} is selected from radiation emitted by a blue laser emitting radiation of the length of 447 nm, a green laser emitting radiation of the length of 532 nm and a red laser emitting radiation of the length of 671 nm.

Also preferably, the graphic marking created by engraving the security element by electromagnetic radiation is made by use of three different electromagnetic radiations λ_{L1}, λ_{L2} and λ_{L3} emitted by a laser, wherein λ_{L1}≠λ_{L2}≠λ_{L3} and wherein each one of λ_{L1}, λ_{L2} and λ_{L3} is selected from radiation emitted by a blue laser emitting radiation of the length of 447 nm, a green laser emitting radiation of the length of 532 nm and a red laser emitting radiation of the length of 671 nm.

The present invention relates also to a method of authentication of an object provided with a system to be used as a security or identification feature of the present invention including a security element made by use of a composition of the present invention with a laser-engraved picture, comprising steps of:
a) exposing the object to visible light;
b) exposing the object to ultraviolet light;
c) watching the multicolour engraved picture changing colour depending on the illumination used, in the security element in the system on the object.

Abbreviations employed within the present description have the following meanings:
VIS - denotes radiation or light of a wavelength in the visible light range;
UV - denotes radiation or light of a wavelength in the ultraviolet light range;
p, q, n - denote integers;
Δ - denotes a range of a relevant specific value;
B_{UV} - a colourant capable of absorbing radiation in the ultraviolet light range;
B_{VIS} - a colourant capable of absorbing radiation in the visible light range;
Δλ_{UV} - a range of radiation wavelengths in the ultraviolet light range;
Δλ_{VIS} - a range of radiation wavelengths in the visible light range;
λ_{UV} - a particular radiation wavelength in the ultraviolet light range;
λ_{VIS} - a particular radiation wavelength in the visible light range;
λ_{UV-VIS} - a particular radiation wavelength in the visible light range emitted by Buv;
λ_{L} - a particular radiation wavelength emitted by a laser;

Different subscripts or superscripts used in the present description, such as subscripts ₐ, _{b}, _{c}, ₙ, _{'}, _{"}, ₁, ₂, ₃, and similar other indexes of denotations, used with abbreviations or symbols concerning relevant parameters or quantities denote different values of a given parameter or quantity. It should be appreciated that if not indicated to the contrary, two different subscripts correspond to two different values.

According to the present description, the terms "light" and "radiation" can be used interchangeably and denote a stream of particles emitted by a material.

The terms "radiation of a length in the ultraviolet light range", "ultraviolet band" or UV light, or UV length as used in the present description are employed according to their conventional meaning, and correspond to radiation of the length in the range of 250 nm-400 nm, in particular in the range of 300 nm-400 nm, since sources of ultraviolet emitting in that band are inexpensive and readily available, however, in case of need a short ultraviolet band of a wavelength in the range of 250-300 nm or other bands could also be used.

It should be appreciated that the term "tint" and "hue" and "colour" are used interchangeably herein to denote different lengths of reflected light perceived by an observer. To sum up, in connection with colour perception effect, it should be assumed that two different tints/hues/colours differ, because light is emitted or absorbed by one hue at the particular wavelength, which differs from the wavelength characteristic for the other hue. Conversely, particular colours may be defined by wavelength ranges connected therewith. According to the invention the following ranges should be assumed as characteristic for a particular colour: 380-450 nm for a violet colour, 450-495 nm for a blue colour, 496-570 nm for a green colour, 570-590 nm for a yellow colour, 590-620 nm for an orange colour, 620-750 nm for a red colour. However, it should be noted that in case of a laser it is assumed that emitted radiation of a wavelength in the blue light range means radiation of a wavelength in the range of from 436 nm to 495 nm, preferably radiation of a wavelength in the range of 427 nm to 467 nm, for example radiation of a wavelength of 447 nm. Similarly, radiation of a wavelength in the green light range means radiation of a wavelength in the range of from 496 nm to 566 nm, preferably radiation of a wavelength in the range of 517 nm to 557 nm, for example radiation of a wavelength of 532 nm. Analogously, laser-emitted radiation of a wavelength in the green light range means radiation of a wavelength in the range of from 610 nm to 780 nm, preferably radiation of a wavelength in the range of 610 nm to 740 nm, preferably 627 nm to 740 nm, for example radiation of a wavelength of 671 nm.

The term "colourant" in the present document relates to any compounds, molecular complexes or other species, which influence a colour of a marking perceived by an observer, capable of absorbing particular radiation and reflecting and/or emitting radiation of another complementary wavelength. In particular, a colourant capable of absorbing radiation in the ultraviolet light range, denoted Buv in the present description, is an arbitrary compound, molecular complex or other species, which absorbs radiation from the ultraviolet light range, and confers a colour to a marking observed in ultraviolet light (UV light) thereby. Next, a colourant capable of absorbing radiation in the visible light range, denoted B_{VIS} in the present description, means any compound, molecular complex or other species, which absorbs radiation in the visible light range, and confers a colour to a marking observed in the visible light range (light VIS) thereby.

The term "substrate" as used in the present description, should be interpreted broadly. Thus, for instance, a substrate may be the article itself, such as an identity document, comprising at least one marking designed to transfer information, or, as it will be illustrated in more detail hereinbelow, may be a laminate or a similar component designed to be used in such an identity document. However, such a substrate need not be a substrate used conventionally for the manufacture of documents, such as a paper sheet or a plastic, or similar materials. Despite indicating in the description preferred substrates comprising a paper substrate, a polycarbonate substrate, a polyvinyl chloride substrate, a polyester substrate or derivatives thereof, according to the invention the security elements making use of a composition of the present invention with a marking engraved thereon may be made on any desired substrate. In particular, the substrate may comprise any materials capable of lamination, but it may also be, for instance, a packaging material, a packing itself (such as retail or selling containers containing greater amounts of articles) or an article, such as, for instance, a textile article comprising, inter alia, clothing, pharmaceutical products. The substrate may, though need not, contain a trademark and/or other marking which indicate not only origin of a commodity, but also a precise location and time of its manufacture (a product lot).

Authentication of a marking in the security element manufactured according to the invention, and therefore verifiable both in the visible light range and in the ultraviolet light range, is usually conducted by verification by an unaided eye, and then by specialized equipment devoted to imaging, using spectral properties of emitted light, i.e. by analysis of an emission spectrum in the visible range and UV spectral range. As emphasized above, the present inventors aimed however at providing a universal security element which do not require use of very specific conditions of verification, as well as an equipment which is expensive and unavailable to the public.

Therefore, according to the present description, the security items are deemed perceptible or verifiable in the visible light spectral region, defined as light in the visible light range or VIS light, when they may be perceived as security items by an observer due to their visual character without any additional devices and in general illumination conditions, such as natural or artificial daylight, at a medium visual acuity od an observer. Such security features are generally defined as the first level security functions.

Moreover, according to the present description the security items are deemed perceptible or verifiable in the ultraviolet light spectral region, defined as light in the ultraviolet light range or UV light, when they may be perceived as security items by an observer due to their visual character by an observer equipped in a suitable, widely available device which emits radiation in the range of the ultraviolet light wavelengths. Examples of such devices include a number of simple, widespread and relatively cheap and easy-to-operate devices, such as for instance UV lamps, UV diodes or optical reading glasses. Security features are generally defined as the second level security functions.

In the case of standard printing processes, and printing on a paper substrate in particular, a subtractive colour process is usually used to obtain the desired effect. For example, in offset printing, intaglio printing or thermal-transfer printing colour halftones are printed, wherein hues are obtained by dot patterns. Perception of diversified colours are then obtained by subtracting and subtractive mixing of the three basic colours, namely cyan, magenta and yellow. Particular colourants, including colourants such as printing ink pigment, absorb a part of incident white light. Non-absorbed part of white light is reflected, reaches observer's eye and evokes colour perception, which is perceives as an inseparable colour of a relevant ink. Thus, each of the basic colours reflects only a part of incident light.

According to the invention, multi-colour quality of the obtained picture is not a result of additivity of various colourants, in particular pigments, applied by printing on a substrate, but it stems from a presence of various colourants in a single composition, at least one first colourant and at least one second colourant, of which the first colourant is capable of absorbing radiation in a first absorption range, the first absorption range (Δλ_{UV}) being located in the ultraviolet light range (B_{UV}), and the second colourant is capable of absorbing radiation in a second absorption range (Δλ_{VIS}) located in the visible light range (B_{VIS}), wherein the first colourant (B_{UV}) absorbs light in the ultraviolet light range (λ_{UV}) and emits light in the visible light range with a first wavelength (λ_{UV-VIS}) located in the said second absorption range (Δλ_{VIS}) of the second colourant which absorbs light in the visible light range (B_{VIS}) with a second wavelength (λ_{VISa}), and changes, after exposition of the composition to UV radiation, a tint, hue or colour of the second colourant. Moreover, due to the fact that at least one second colourant which absorbs light in the visible light range (B_{VIS}) is capable of laser discolouration which alters spectral characteristics of the second colourant (B_{VIS}) in a wavelength range of absorbed visible light (λ_{VISa}) from an initial value (λ_{VISa'}) to a final value (λ_{VISa"}) located in the second absorption range (Δλ_{VIS}), after applying a composition onto a substrate and exposing it to a laser, a multi-colour engraved picture or marking is obtained in the security element applied onto a substrate.

A security element of the present invention can be utilized during securing various kinds of documents, including, but not limited to, securities and security documents, such as banknotes, passports, cards, identity documents or the like. It can comprise a marking which individualizes articles of a high value, or be utilized as a security element of particular significance, such as, for example, pharmaceutical products. Such an element, owing to the use of a composition of the present invention, comprises a marking having colorful pictures, at least one visible and one hidden, i.e. visible in ultraviolet radiation.

According to the present description, whenever a reference is made to a "picture" or "marking", it is to be interpreted as a generally readable visually and/or automatically pattern, often carrying particular information, possible to comprehend by an observer through a normal cognitive action. Such pictures or markings comprise both realistic motifs and abstract motifs, including in particular linear motifs. Examples of realistic motifs include in particular portraits, landscape, plant, or animal motifs. Realistic motifs can also be images of coats of arms, buildings, flags. Abstract motifs include all other graphically representable markings, including in particular ones that are particular patterns, characters, including trademarks or codes. Another particular example of abstract motifs is a text or individual letters or digits. According to the invention there is a possibility that under normal illumination only fragments of a text, letters or digits are visible, which become entirely visible in a multi-colour picture after their exposition to radiation of a wavelength from the ultraviolet radiation range. However, the list of above-indicated pictures is not exhaustive, since such pictures or markings within a security element can be laser-engraved in any shape.

Particular advantages of the presently claimed solutions which are desired in respect of protecting goods against adulteration are evident when a composition of the invention is used which comprises more than one first colourant capable of absorbing radiation in the ultraviolet light range (B_{UV}) and more than one second colourant capable of absorbing radiation in the visible light range (B_{VIS}), wherein the first colourants are different from each other and the second colourants are different from each other. By applying such a composition and more then one laser wavelength when engraving a picture, a multi-color, changeable, depending on a light wavelength on operation of which is set the security element that, which comprises a first picture observable in visible light and a second picture observable in UV light. In this way, protecting ability of the security element can be significantly enhanced, and simultaneously a simple verification method of authenticity of the commodity provided with such a security element, in particular a documentu, such as an identity document or a security is obtained. Complexity of multicolour, multi-hue security features obtained by a particular choice of a suitable ink composition for a colourant composition is a significant obstacle for potential forgers, thus influencing to a significant degree a safety level guaranteed by a particular security item. Due to the presently developed solution there is a chance to provide a system comprising a substrate with a composition applied thereon, which may be stored, and obtaining its specific properties of a security element only after a subsequent treatment, such as laser engraving, to provide particular pictures or markings, often containing specific personalizing or informative data.

The present invention has been illustrated on the drawing, wherein:

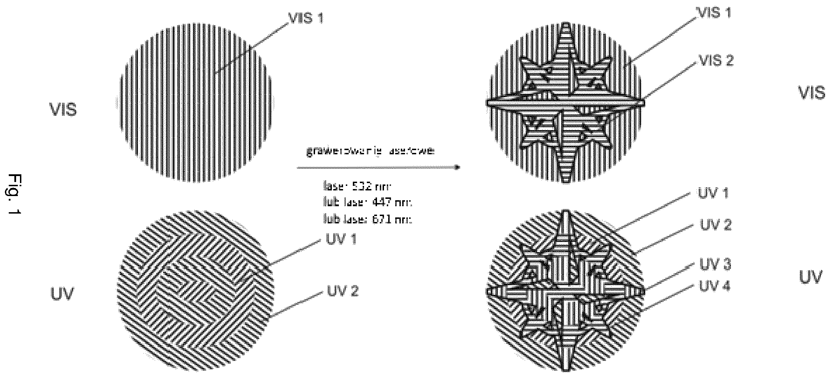

Fig. 1 shows schematically a change in the view of a picture observed in visible light and ultraviolet UV light (left panel) for a marking obtained by use of two different UV colourants denoted UV1 and UV2 and one VIS colourant denoted VIS1 observed after laser engraving at one wavelength selected from 532 nm, 447 nm and 671 nm.

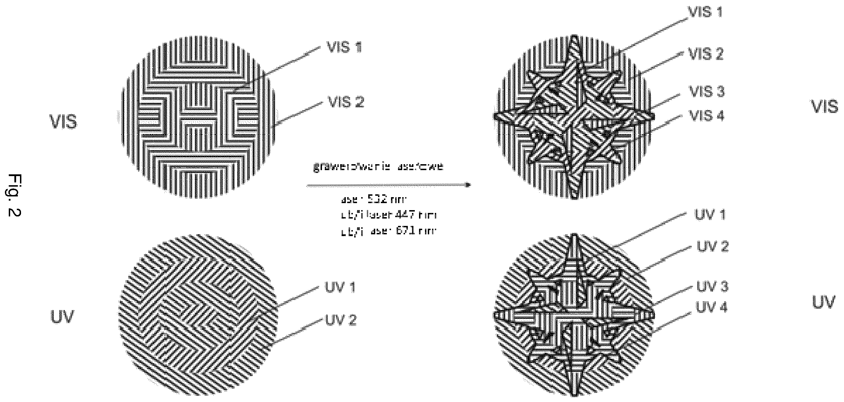

Fig. 2 shows schematically a change in the view of a picture observed in visible light and ultraviolet light (left panel) for a marking obtained by use of two different UV colourants denoted UV1 and UV2 and two different VIS colourants denoted VIS1 and VIS2 observed after laser engraving at one, two or three different wavelengths selected from 532 nm, 447 nm and 671 nm.

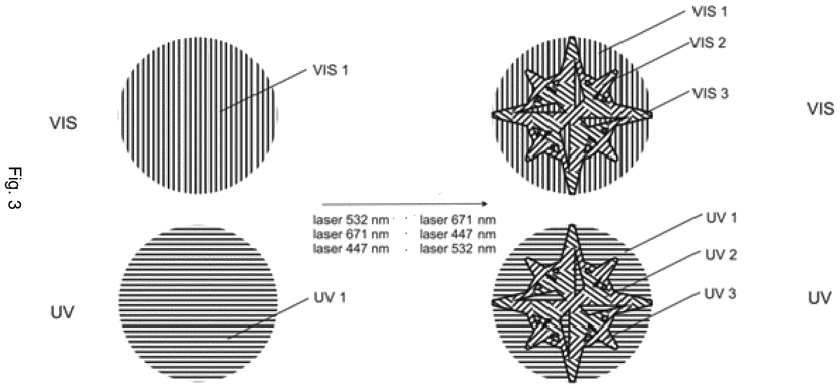

Fig. 3 shows schematically a change in the view of a picture observed in visible light and ultraviolet light (left panel) for a marking obtained by use of one UV colourant denoted UV1 and one VIS colourant denoted VIS1 observed after laser engraving at two different wavelengths selected from 532 nm, 447 nm and 671 nm.

As it stems from the diagrams presented on Fig. 1-3, by utilizing a composition of the invention, multicolour pictures with a double security item combining level 1 and level 2 security can be obtained by a process of the invention.

For example, as illustrated on Fig. 1, by using a composition obtained on the basis of two different UV colourants denoted UV1 and UV2 and one VIS colourant denoted VIS1 after laser engraving of a picture at the composition coated area with a laser of one wavelength selected from 532 nm, 447 nm and 671 nm, a two-colour picture in visible light (different colours denoted VIS1 and VIS2, respectively) and a four-colour picture in ultraviolet light (different colours denoted UV1, UV2, UV3 and UV4, respectively) is obtained.

Next, as illustrated on Fig. 2, a four-colour picture in visible light (VIS) and a four-colour picture in ultraviolet light (UV) is provided by use a composition of two different colourants VIS denoted VIS1 and VIS2, and two different UV colourants denoted UV1 and UV2. As a result of laser engraving of the area which was coated by an ink composition of colourants of the invention by use of one, two or three different laser wavelengths used for engraving, selected, for instance, from 532 nm, 447 nm and 671 nm, a four-colour picture both in visible light (different colours are denoted on Fig. 2 VIS1, VIS2, VIS3 and VIS4, respectively) and in ultraviolet light (different colours are denoted UV1, UV2, UV3 and UV4, respectively).

As illustrated schematically on Fig. 3, three-colour pictures in visible light and in ultraviolet light are provided by use, for the manufacture of the picture, a composition consisting only of two different colourants VIS1 and UV1, which, due to laser engraving at two different wavelengths, for example selected from 532 nm, 447 nm and 671 nm, provides obtaining three different colours observable both in visible light (different colours are denoted VIS1, VIS2 and VIS3, respectively) and ultraviolet light (different colours are denoted UV1, UV2 and UV3, respectively).

In the following, exemplary compositions of the invention and security elements obtained therefrom are described in detail. It should be appreciated that the following is described to illustrate the invention and should not be construed as limiting the scope of protection as defined with the patent claims. The present examples are meant only to provide specific practical embodiments of the invention by indicating the method for obtaining in an exemplary way compositions according to the present invention based on current experimental data. Therefore it should be assumed that the present document discloses only a representative number of compositions, processes for the preparation thereof and pictures comprising a security element obtained by use thereof.

### EXAMPLES

### Example 1

A first composition of an offset ink was prepared from a mixture of 10% of Pigment Red 57:1 with 10% of the green fluorescent pigment SC4 manufactured by Angstrom. The mixture was ground in a laboratory disk mill along with 80% of the prior art transparent UV-fixed base 3CP0000 dedicated for offset printing and commercially available from Sicpa. In an analogous way, a second composition of an offset ink composed from 10% of Pigment Red 57:1, 10% of the blue fluorescent pigment CD 766 available from Honeywell and 80% of the prior art transparent UV-fixed base 3CP0000 dedicated for offset printing and commercially available from Sicpa was prepared.

Moreover, compositions observable in the visible light range have the same colour perceived by an observer without assistance of additional devices in normal daylight conditions, but have different colours in the ultraviolet light range.

Next, the above-prepared ink compositions were applied onto a polycarbonate substrate of a nominal basis weight of 1 g/m² by the offset printing technology and fixed by UV radiation having energy of 100 mJ/m² in a way to create a coherent graphic element. Then the obtained structure was laminated, and subjected to laser engraving to form a picture by use of a green laser having a wavelength of 532 nm with the following marking characteristics: frequency - 10 kHz; beam sweep rate 500 mm/s; pixel spacing 50 µm; laser power 25 - 40%. Following the laser marking, in places where the composition was exposed to laser radiation, a distinct colour change of composition colourants used for the preparation of the engraved element visible both in visible light VIS and in UV light was observed. As a result of the marking process, from a one-colour picture in visible light VIS1 and a two-colour picture in ultraviolet light (UV1, UV2) a two-colour picture was made in visible light (VIS1 and VIS2) and a four-colour in the ultraviolet range (UV1, UV2, UV3 and UV4).

### Example 2

A first composition of an offset ink was prepared from a mixture of 10% of Pigment Red 57:1 with 10% of the green fluorescent pigment SC4 manufactured by Angstrom. The mixture was ground in a laboratory disk mill along with 80% of the prior art transparent UV-fixed base 3CP0000 dedicated for offset printing and commercially available from Sicpa. In an analogous way, a second composition of an offset ink composed of 10% of Pigment Red 57:1, 10% of the blue fluorescent pigment CD 766 available from Honeywell, 10% of 3CP1906 and 80% of the prior art transparent UV-fixed base 3CP0000 dedicated for offset printing and commercially available from Sicpa was prepared. Next, compositions were applied onto a polycarbonate substrate by the offset technology, fixed, laminated and subjected to engraving according to the procedure described in Example 1.

Similarly as in example 1, following the laser marking, in places where the composition was exposed to laser radiation, a distinct colour change of composition colourants used for the preparation of the engraved element visible both in visible light VIS and in UV light was observed, only except that as a result of the laser marking process, from a two-colour picture both in visible light and in ultraviolet light (VIS1, VIS2, UV1, UV2) a four-colour picture was formed in the visible and ultraviolet light range (VIS1, VIS2, VIS3, VIS4, UV1, UV2, UV3 and UV4).

### Examples 3-5

Preparing a composition of offset inks, applying the composition onto a polycarbonate substrate, fixing, laminating and the laser engraving were prepared and conducted in Examples 3-5 according to the procedure described in Example 2. Specific components of the ink compositions and parameters of applying, fixing and laser engraving thereof are shown in Table 1 below, which illustrates all examples of practical embodiments of the invention. Analogously as in example 2, as a result of the marking process, from a two-colour picture both in visible light and in ultraviolet light (VIS1, VIS2, UV1, UV2), a four-colour picture was formed in the visible and ultraviolet light range (VIS1, VIS2, VIS3, VIS4, UV1, UV2, UV3 and UV4).

### Example 6

A composition of an offset ink was prepared from a mixture of 10% of Pigment Red 57:1, 10% of the green fluorescent pigment manufactured by Angstrom SC4 and 2% of Pigment Blue colourant 15:4. The mixture was ground in a laboratory disk mill along with 78% of the prior art transparent UV-fixed base dedicated for offset printing and commercially available from Sicpa.

Then, the composition was applied onto a polycarbonate substrate of a nominal basis weight of 1 g/m² by the offset printing technology and fixed by UV radiation having energy of 100 mJ/m². Then the obtained structure was laminated, and then a picture was engraved by use of the two laser wavelengths: a green laser 532 nm operated with the following marking characteristics: frequency - 10 kHz; sweep rate 500 mm/s; pixel spacing 50 µm; laser power level 25 - 40%, and a red laser 671 nm - with the following marking characteristics: frequency 10 kHz; sweep rate 500 mm/s; pixel spacing 50µm; laser power level 35 - 50%. Following the laser marking, in places where the composition was exposed to laser radiation, a distinct colour change of composition colourants used for the preparation of the engraved element visible both in visible light VIS and in UV light was observed. As a result of the marking process, from a one-colour picture in the range of VIS1, UV1 a three-colour picture was formed both in visible light VIS (VIS1, VIS2 and VIS3) and in UV light (UV1, UV2 and UV3).

### Example 7

A composition of an offset ink, as well as applying the composition onto a polycarbonate substrate, fixing, laminating and the laser engraving was conducted in Example 7 according to the procedure described in Example 6. Specific components of the ink compositions and parameters of applying, fixing and laser engraving thereof are shown in Table 1 below. As a result of the marking process, from a one-colour picture in the range of VIS and UV (VIS1, UV1), a three-colour picture was formed both in visible light VIS (VIS1, VIS2 and VIS3) and in UV light (UV1, UV2 and UV3).

### Example 8a and 8b

A composition of a first offset ink was prepared from a following mixture: 20% of 3CP4907 along with 80% of a red fluorescent ink 360051F from Sicpa. A composition of a second offset ink was prepared from a following mixture: 20% of 3CP4907 along with 5% of a yellow-green fluorescent pigment CD 704 commercially available from Honeywell. Then, the mixture was ground in a laboratory disk mill along with 75% of the prior art transparent UV-fixed base 3CP0000 dedicated for offset printing and commercially available from Sicpa. Moreover, compositions observable in the visible light range have the same colour perceived by an observer without assistance of additional devices in normal daylight conditions, but have different colours in the ultraviolet light range.

Then, ink compositions were applied onto a polycarbonate substrate and onto a polyvinyl chloride substrate of a nominal basis weight of 1 g/m² by the offset printing technology and fixed by UV radiation having energy of 100 mJ/m². Then the obtained structure was laminated, and a picture was engraved by use of a red laser 671 nm - with the following marking characteristics: frequency 10 kHz; sweep rate 500 mm/s; pixel spacing 50µm; laser power level 35 - 50%. Following the laser marking, in places where the composition was exposed to laser radiation in the case of the composition applied onto both the polycarbonate substrate (Example 8a) and the polyvinyl chloride substrate (Example 8b), a distinct colour change of composition colourants used for the preparation of the engraved element visible both in visible light VIS and in UV light was observed. As a result of the marking process, from a one-colour picture in visible light VIS1 and a two-colour picture in the ultraviolet range (UV1, UV2), a two-colour picture was formed in the visible range (VIS1 and VIS2) and a four-colour picture in UV light (UV1, UV2, UV3 and UV4).

### Examples 9-12

Compositions of offset inks, as well as applying the composition onto a polycarbonate substrate, fixing, laminating and the laser engraving were prepared and conducted in Examples 9-12 according to the procedure described in Example 8. Analogously as in example 8, a substrate, onto which the ink compositions are applied, can be both polycarbonate and polyvinyl chloride. Specific components of the ink compositions and parameters of applying, fixing and laser engraving thereof are shown in Table 1 below. As a result of the marking process, from a two-colour picture in visible light VIS1, VIS2 and a two-colour picture in the ultraviolet range (UV1, UV2), a four-colour picture was formed in the visible range (VIS1, VIS2, VIS3, VIS4) and a four-colour picture in UV light (UV1, UV2, UV3 and UV4).

### Example 13

Compositions of offset inks, as well as applying the composition onto a polycarbonate substrate, fixing, laminating and the laser engraving were prepared and conducted in Examples 13 according to the procedure described in Example 8. A substrate, onto which the ink compositions are applied, is polycarbonate. Specific components of the ink compositions and parameters of applying, fixing and laser engraving thereof are shown in Table 1 below. Marking was conducted in a three cobsecutive steps by use of laser radiation having a wavelength of 532 nm, 447 nm and 671 nm. As a result of the three-step marking process, from a two-colour picture in visible light VIS1, VIS2 and a two-colour picture in the ultraviolet range (UV1, UV2), a four-colour picture was formed in the visible range (VIS1, VIS2, VIS3, VIS4) and a five-color picture in UV light (UV1, UV2, UV3, UV4, UV5).

### Example 14

A ink composition for screen printing was prepared from a mixture of 1% of Pigment Red 57:1, 1% of a pigment Yellow 13, 15% of a green fluorescent colourant available from Rotoflex. Then, the mixture was mixed in a mixer with a solvent base, known in the prior art, specially dedicated for screen printing, available from Pröll.

Subsequently, the composition was applied onto a polycarbonate substrate, a printing screen of a resolution of 77-48 and fixed by solvent evaporation. Then the obtained structure was laminated, and then a picture was engraved by use of the two laser wavelengths: a green laser 532 nm operated with the following marking characteristics: frequency - 10 kHz; sweep rate 500 mm/s; pixel spacing 50 µm; laser power level 40 - 70%, and a blue laser 447 nm - with the following marking characteristics: frequency 10 kHz; sweep rate 500 mm/s; pixel spacing 50 µm; laser power level 25 - 35%. Following the laser marking, in places where the composition was exposed to laser radiation, a distinct colour change of composition colourants used for the preparation of the engraved element visible both in visible light VIS and in UV light was observed. As a result of the marking process,, from a one-colour picture in visible and ultraviolet light VIS1, UV1, a three-color picture was formed in the visible and ultraviolet range (VIS1, VIS2, VIS3, UV1, UV2, UV3).

### Example 15

A composition of a first offset ink was prepared from a mixture of: 10% of Pigment Red 57:1 along with 10% of fluorescent pigmentu SC4. Then, the mixture was ground in a laboratory disk mill along with 66% of a transparent oxidative base 3SB0010, known from the prior art, dedicated for offset and commercially available from Sicpa along with 10% of 3SB1033. Then, the mixture was admixed with 4% of the siccative 870961 and the whole was mixed with a mixer. A composition of a second offset ink was prepared from a mixture of: 10% of Pigment Red 57:1 along with 10% of a fluorescent pigment CD766 available commercially from Honeywell. Then, the mixture was ground in a laboratory disk mill along with 76% of a transparent oxidative base 3SB0010 known from the prior art, dedicated for offset and commercially available from Sicpa. Then, the mixture was admixed with 4% of the siccative 870961 and the whole was mixed with a mixer.

Then, the composition was applied on a paper substrate of a nominal basis weight of 1 g/m² by the offset printing technology and conventionally fixed by drying. Then, it was subjected to picture engraving by use of a green laser 532 nm with the following marking characteristics: frequency - 10 kHz; sweep rate 500 mm/s; pixel spacing 50 µm; laser power level 30 - 70%. Following the laser marking, in places where the composition was exposed to laser radiation, a distinct colour change of composition colourants used for the preparation of the engraved element visible both in visible light VIS and in UV light was observed.

As a result of the marking process, from a two-colour picture in visible and ultraviolet light VIS1, VIS2, UV1, UV2, a four-colour picture was formed in the visible and ultraviolet range (VIS1, VIS2, VIS3, VIS4 UV1, UV2, UV3, UV4).

### Examples 16-17

Compositions of offset inks, as well as applying the composition onto a paper substrate, fixing and the laser engraving were prepared and conducted in Examples 16-17 according to the procedure described in Example 15. Specific components of the ink compositions and parameters of applying, fixing and laser engraving thereof are shown in Table 1 below.

As a result of the marking process, from a one-colour picture in visible and ultraviolet light VIS1, UV1 a three-colour picture was formed in the visible and ultraviolet range (VIS1, VIS2, VIS3, UV1, UV2, UV3).

### Example 18-19

Compositions of offset inks, as well as applying the composition onto a paper substrate, fixing and the laser engraving were prepared and conducted in Examples 18-19 according to the procedure described in Example 15. Specific components of the ink compositions and parameters of applying, fixing and laser engraving thereof are shown in Table 1 below.

As a result of the marking process, from a two-colour picture in visible and ultraviolet light VIS1, VIS2, UV1, UV2 a four-colour picture was formed in the visible and ultraviolet range (VIS1, VIS2, VIS3, VIS4 UV1, UV2, UV3, UV4).

### Example 20

A composition of an offset ink, as well as applying the composition onto a paper substrate, fixing and the laser engraving were prepared and conducted in Example 20 according to the procedure described in Example 15. Specific components of the ink composition and parameters of applying, fixing and laser engraving thereof are shown in Table 1 below.

As a result of the marking process by three lasers, from a two-colour picture in visible and ultraviolet light VIS1, VIS2, UV1, UV2 a five-colour picture was formed in the visible and ultraviolet range (VIS1, VIS2, VIS3, VIS4, VIS5, UV1, UV2, UV3, UV4, UV5).

### Example 21

A first composition of an offset ink was prepared from a mixture of 10% of Pigment Red 57:1 with 10% of the green fluorescent pigment SC4 available from Angstrom. The mixture was ground in a laboratory disk mill along with 80% of the prior art transparent UV-fixed base 3CP0000 dedicated for offset printing and commercially available from Sicpa, and 10% of 3CP1906. Analogously as above, a second composition of an offset ink was prepared composed of 20% of 3CP4907 and 80% of the prior art transparent UV-fixed base 3CP0000 dedicated for offset printing and commercially available from Sicpa.

Next, the above-prepared ink compositions were applied onto a polycarbonate substrate of a nominal basis weight of 1 g/m² by the offset printing technology and fixed by UV radiation having energy of 100 mJ/m² in a way to create a coherent graphic element. Contrary to examples 1-20, the ink compositions were applied in such a way that they partially overlapped. By applying in this way layers of inks, from the two ink compositions a three-colour picture was obtained both in visible and ultraviolet light. Then the obtained structure was laminated, and subjected to laser engraving to form a picture by use of a green laser having a wavelength of 532 nm with the following marking characteristics: frequency - 10 kHz; beam sweep rate 500 mm/s; pixel spacing 50 µm; laser power level 25 - 40%, and a red laser having a wavelength of 671 nm with the following marking characteristics: frequency 10 kHz; sweep rate 500 mm/s; pixel spacing 50µm; laser power level 35 - 50%. Following the laser marking, in places where the composition was exposed to laser radiation, a distinct colour change of composition colourants used for the preparation of the engraved element visible both in visible light VIS and in UV light was observed.

As a result of the marking process of the graphic element formed by the two ink compositions forming a three-color picture in visible light VIS1, VIS2, VIS3 and a three-color picture in ultraviolet light (UV1, UV2, UV3), a six-colour picture was formed in visible light (VIS1, VIS2, VIS3, VIS4, VIS5, VIS6) and a six-colour picture was formed in the ultraviolet range (UV1, UV2, UV3, UV4, UV5, UV6).

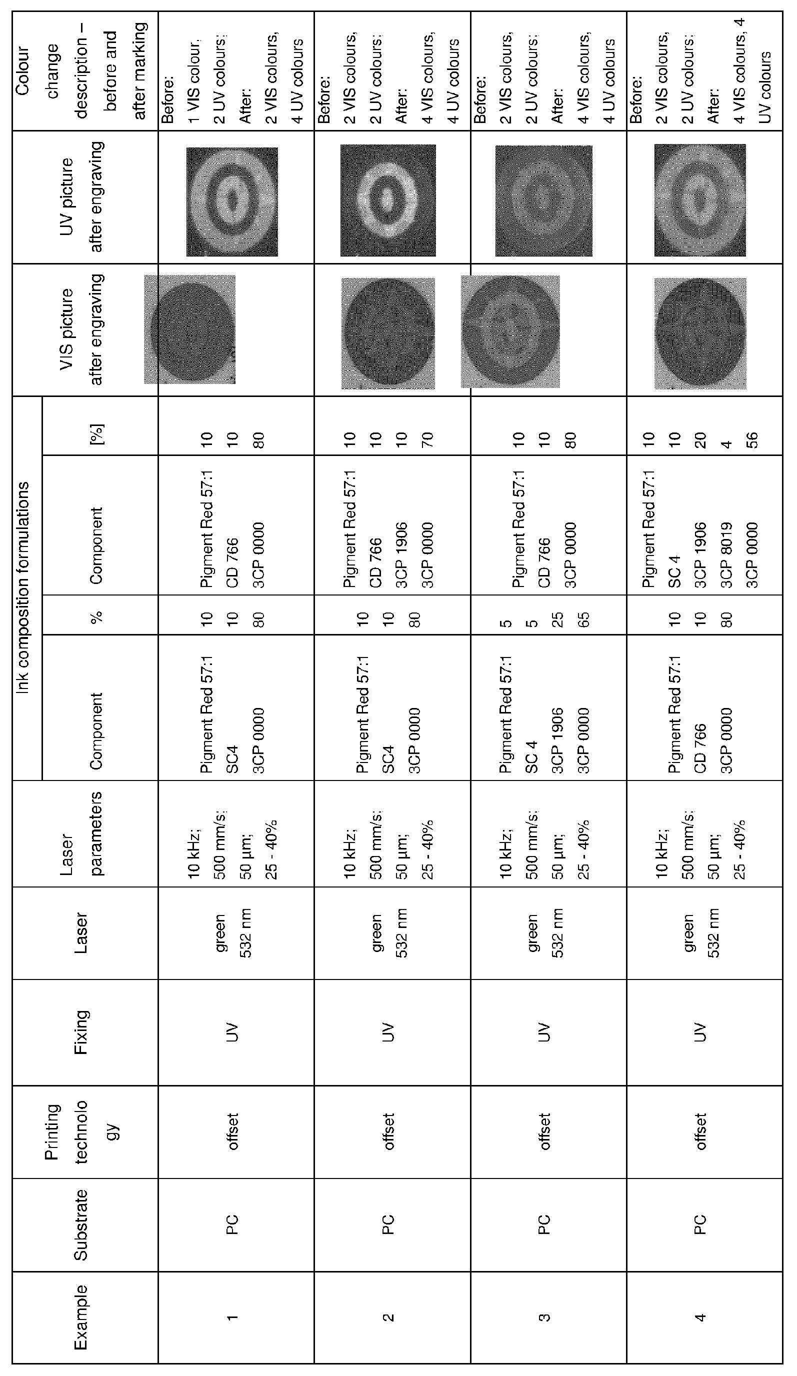

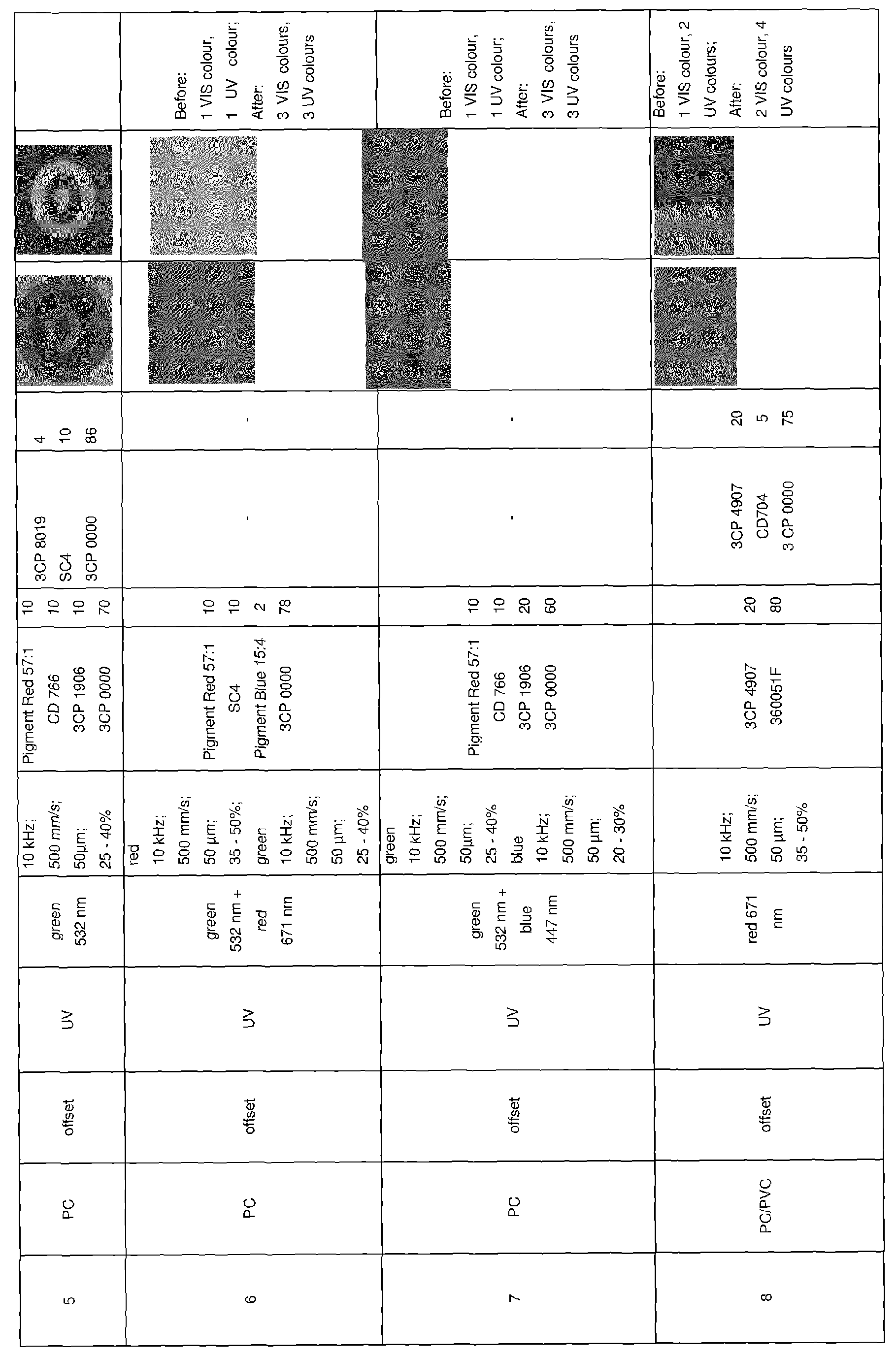

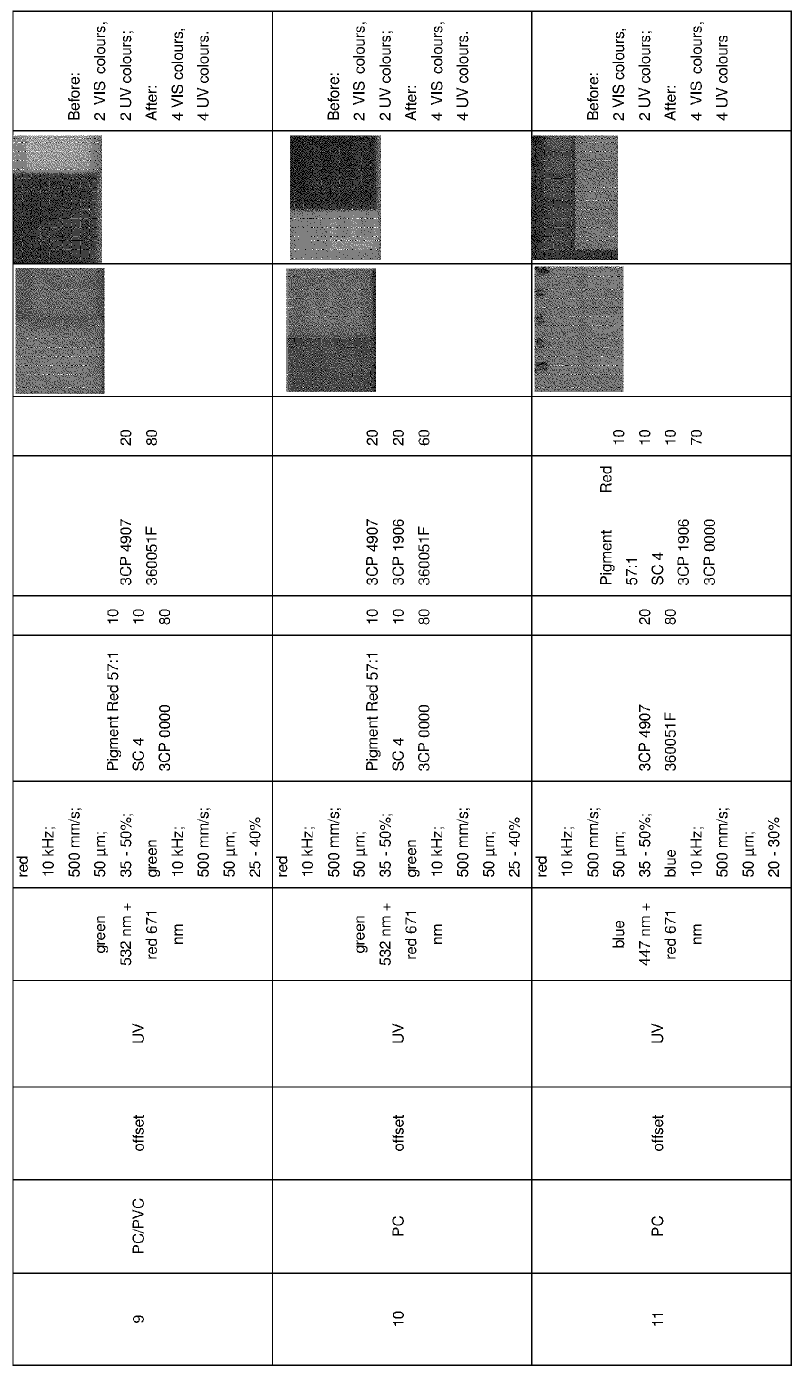

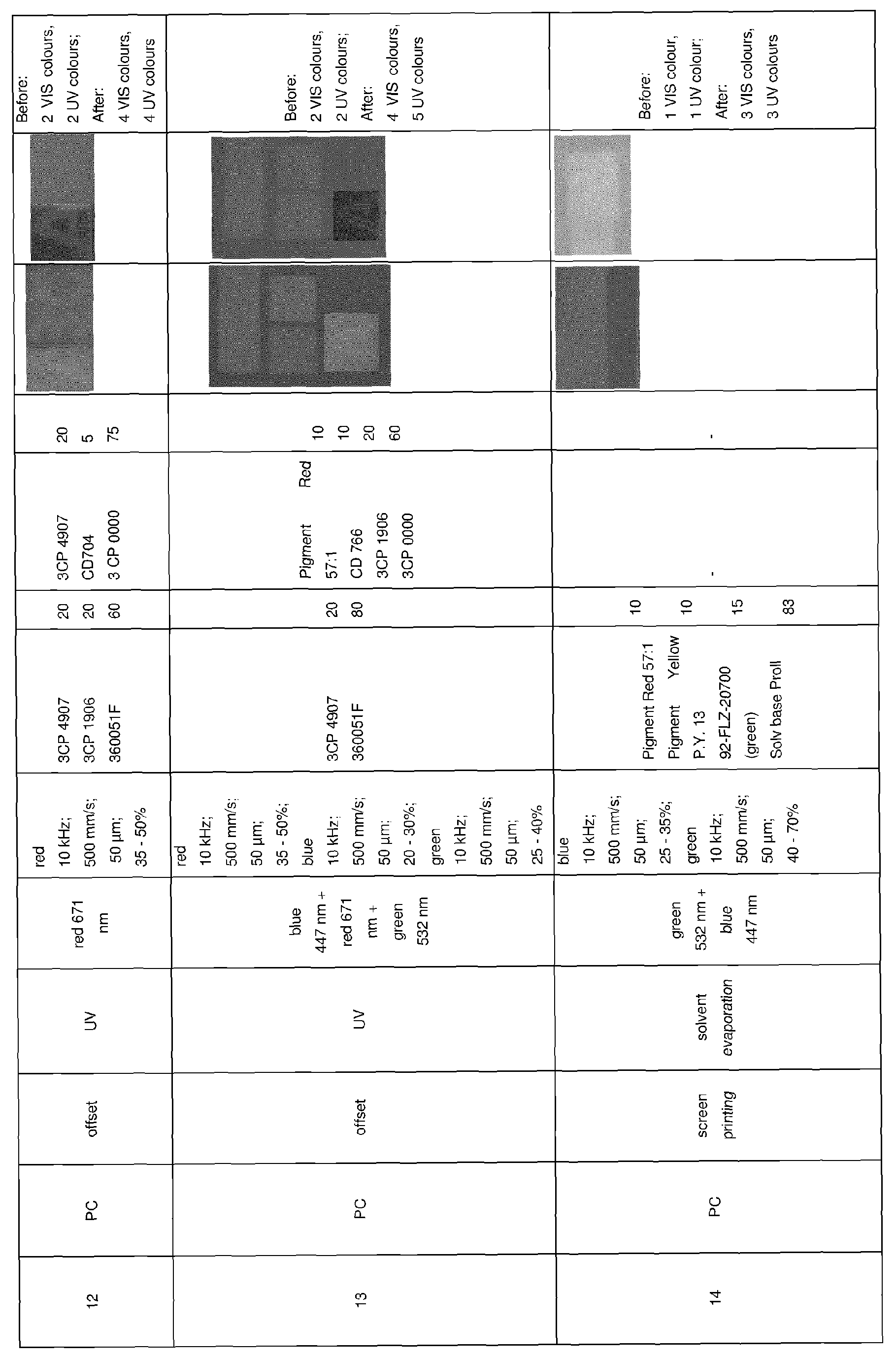

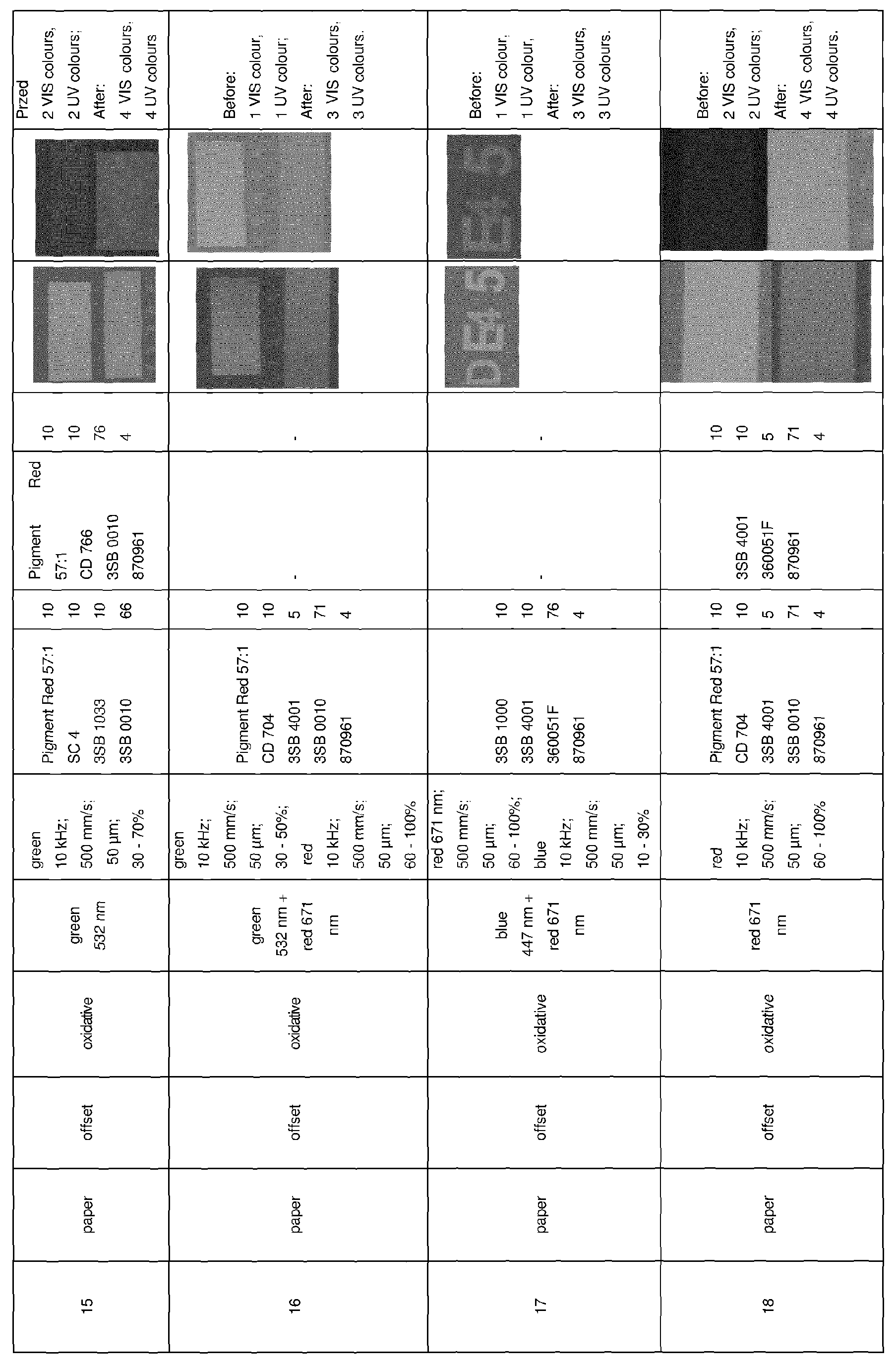

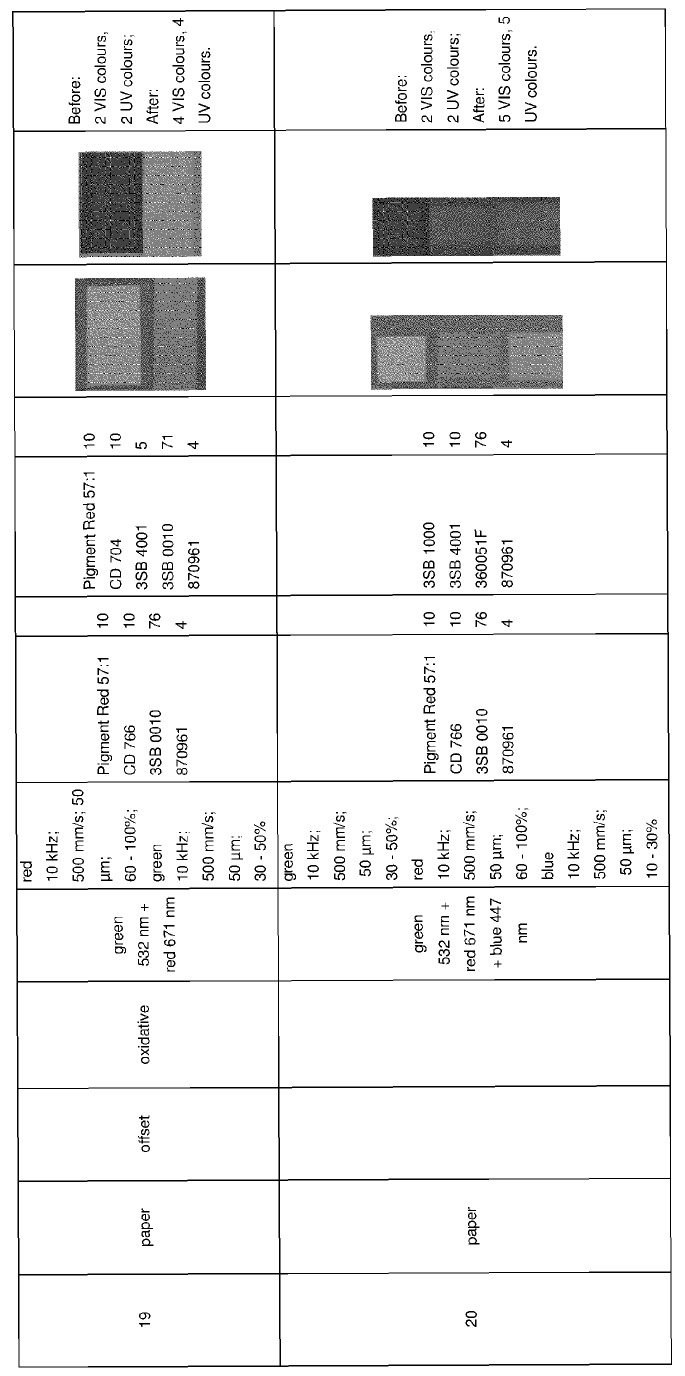

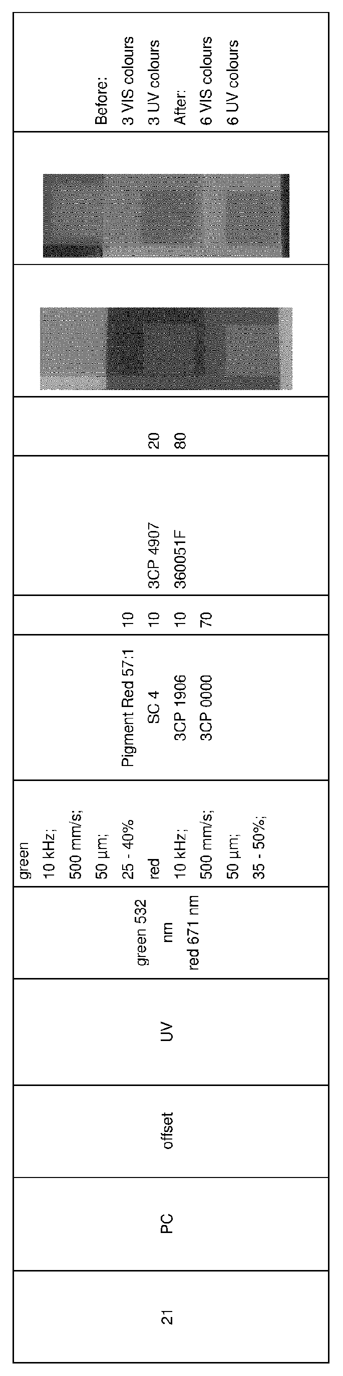

As illustrated in the foregoing embodiments of the invention, by selecting a composition of the invention, multicolour pictures can be obtained, which are, for example, vehicles of significant items of information, in particular personalizing elements. As described above, the preparation of a composition of the present invention is extremely easy, does not require use of expensive materials and their application onto a substrate is fast and easy to implement.

Additionally, as mentioned before, and as illustrated in the examples described above, by use of a composition of the present invention, a system can be prepared which includes a substrate initially modified with an ink composition of the invention, which only later, at a separate step, may be subjected to laser engraving to provide an personalized/individualized marking. Thus, by selecting appropriate compositions of the invention and applying them onto a specific substrate, a possibility is provided to apply onto a composition-modified area particular pictures and/or markings, which can fulfil additional, further functions, such as a protective function, individualizing function, personalizing function. For example, if the marking contains data which personalize a commodity, the commodity can be easily identified and its authenticity confirmed with the present solution. Such application is particularly useful with respect to identity documents, including passports, driving licenses, accession cards and security documents. Further, in the case where a security element includes data concerning a lot and serial number of a product, preferably a medicinal product, the present solution can significantly contribute to the security enhancement of the product's turnout. Similarly, verification of a product's origin and its authenticity by use of a security system proposed in the present description can be used with respect to expensive and exclusive products.

Thus, the solution provided by the present inventors, while relatively easy and inexpensive to implement, is characterized by very universal character and a number of diversified applications, including personalizing elements of security documents and other products.

While the present invention was described with respect to some selected preferred embodiments thereof, it will be evident for the persons skilled in the art that in disclosed Examples different modifications, alterations, omissions and substitutions can be made without departing from the common technical concept, defined in the description, of the claimed solutions presented in the patent claims that define the scope of protection.

## Claims

1. An ink formulation composition for printing a multicolour picture in security elements applied onto a substrate, visible both in the visible spectrum (VIS) wavelengths and in the ultraviolet light (UV) wavelengths, comprising at least one (p≥1) first colourant and at least one (q≥1) second colourant different from the first colourant, wherein the first colourant is capable of absorbing radiation in a first absorption range, the first absorption range (Δλ_{UV}) being located in the ultraviolet light range (Buv), and the second colourant is capable of absorbing radiation in a second absorption range (Δλ_{VIS}) located in the visible light range (B_{VIS}), **characterized in that** the first colourant (Buv) is a colourant which absorbs light in the ultraviolet light range (λ_{UV}) and which emits light in the visible light range with a first wavelength (λ_{UV-VIS}) located in the said second absorption range (Δλ_{VIS}) of the second colourant which absorbs light in the visible light range (B_{VIS}) with a second wavelength (λ_{VISa}), wherein the at least one second colourant which absorbs light in the visible light range (B_{VIS}) is capable of laser discolouration which alters spectral characteristics of the second colourant (B_{VIS}) in a wavelength range of absorbed visible light (λ_{VISa}) from an initial value (λ_{VISa'}) to a final value (λ_{VISa"}) located in the second absorption range (Δλ_{VIS}) to provide engraved multicolour picture in the security element applied onto the substrate.

2. The composition according to Claim 1, **characterized in that** the composition comprises at least two or more (p≥2) first colourants capable of absorbing radiation in the ultraviolet light range (B_{UVn n≥1}), each of which emits light with a first wavelength (λ_{UV-VISn, n≥1}), wherein the first wavelength (λ_{UV-VISx}) emitted by one of the first colourants capable of absorbing radiation in the ultraviolet light range (Buvx) is different from the wavelength (λ_{UV-VISy, y≠x}) emitted by the remaining first colourants capable of absorbing radiation in the ultraviolet light range (B_{UVy, y≠x}).

3. The composition according to any of Claims 1-2, **characterized in that** the composition comprises two or more (q≥2) of the second colourants capable of absorbing radiation in the visible light range (B_{VISn, n≥1}) and absorbing light emitted by the first colourant capable of absorbing radiation in the ultraviolet light range (B_{UVn, n≥1}) with a first wavelength (λ_{UV-VISn, n≥1}), each of said colourants absorbing light with a second wavelength (λ_{VISn, n≥1}), wherein the second wavelength (λ_{VISx}) absorbed by one of the second colourants capable of absorbing radiation in the visible light range (B_{VISx}) and absorbing light emitted by first colourant capable of absorbing radiation in the ultraviolet light range (Buvx) with a first wavelength (λ_{UV-VISx}) is different from the remaining second wavelengths (λ_{VISy, y≠x}) absorbed by the remaining second colourants capable of absorbing radiation in the visible light range (B_{VISy, y≠x}) and absorbing light emitted by the first colourant capable of absorbing radiation in the ultraviolet light range (B_{UVy, y≠x}) with a first wavelength (λ_{UV-VISy, y≠x}), preferably comprises two (q=2) second colourants capable of absorbing radiation in the visible light range (B_{VIS1} and B_{VIS2}), each of which absorbs light with a second wavelength (λ_{VIS1 and} λ_{VIS2}), wherein one of the second wavelengths (λ_{VIS1}) absorbed by one of the second colourants capable of absorbing radiation in the visible light range (B_{VIS1}) is different from the remaining second wavelengths (λ_{VIS2}) absorbed by the remaining second colourants capable of absorbing radiation in the visible light range (B_{VIS2}).

4. The composition according to any of preceding Claims, **characterized in that** the first colourant emitting light in the ultraviolet light range (Buv) is a fluorescent colourant selected from a green fluorescent colourant, a yellow fluorescent colourant, a red fluorescent colourant and a blue fluorescent colourant and/or **in that** the second colourant absorbing VIS light is a colourant selected from the group consisting of red, yellow, blue and violet pigments of the parameter consistent with the Colour Index International selected from Pigment Red 57:1, Pigment Yellow 13, Pigment Yellow 81, Pigment Red 242, Pigment Red 146, Pigment Blue 15:4 or 15:3, Pigment Violet 23.

5. The composition according to any of preceding Claims, **characterized in that** the composition comprises additionally a base inert towards the colourants present in the composition, transparent in VIS light and inactive in ultraviolet UV light, preferably a UV-set base designed for offset print or an oxidative base enriched in a siccative, a UV-set base designed for the screen-printing, which is solvent- or water-based.

6. A process for the preparation of a system including a security element on a substrate comprising the following steps:
a) applying onto a substrate, at least onto a part thereof, the at least one ink composition as defined in any of Claims 1-5, wherein in the case of applying two or more compositions with different content of at least one of the colourants present in the composition, the compositions are applied onto different areas of the security element, wherein preferably applying onto a substrate of the at least one ink composition is conducted by a printing technology, more preferably by the offset printing, flexographic printing or screen printing, most preferably the offset printing or screen printing;
b) fixing the ink composition applied onto the substrate, wherein preferably fixing is conducted by radiation hardening with ultraviolet UV, by solvent evaporation, or else oxidative oxidation with addition of a siccative;
c) laser engraving the ink composition-modified substrate of the system containing the security element obtained at step b), with at least one laser emitting electromagnetic radiation having a wavelength of λ_{L} which enables discolouration of the at least one of the second VIS colourants from those present in the ink composition, the wavelength λ_{L} being selected from lengths between 380 - 700 nm.

7. The process according to Claim 6, **characterized in that** the substrate, onto which the ink composition is applied in step a), is selected from a paper substrate, a polycarbonate substrate, a polyvinyl chloride substrate, a polyester substrate or derivatives thereof.

8. The process according to any of Claims 6-7, **characterized in that** the step b) includes additionally coating the substrate modified by the fixed ink composition with a protective layer, which is transparent in the visible light range VIS and inactive in ultraviolet light UV, preferably the coating is conducted by lamination or by applying a lacquer coat.

9. The process according to any of Claims 6-8, **characterized in that** the laser engraving is conducted with at least one laser operated at a frequency, power, beam sweep rate and pixel spacing, which do not degrade the substrate, preferably at the frequency in the range of from 10 to 30 kHz, the power not exceeding 70% of a laser power, the beam sweep rate of 300-600 mm/s and the pixel spacing of 30-60µm.

10. The process according to any of Claims 6-9, **characterized in that** the laser engraving is conducted by use of two or three, respectively, electromagnetic radiations of different lengths emitted by a laser, wherein the first electromagnetic radiation with a first wavelength λ_{L1} emitted by a laser differs from the second wavelength λ_{L2} emitted by a laser, and differs from an optionally used third wavelength λ_{L3} emitted by a laser, wherein λ_{L1} ≠ λ_{L2}≠ λ_{L3} are selected from within the visible light range of 380 -700 nm, wherein preferably the laser engraving is conducted by use of two wavelengths (λ_{L1} and λL₂) or three wavelengths (λ_{L1} , λ_{L2} and λ_{L3}), respectively, of electromagnetic radiations emitted by a laser is conducted in consecutive separate steps.

11. The process according to any of Claims 6-10, **characterized in that** the laser engraving is conducted by use of at least one electromagnetic radiation having a wavelength of λ_{L} emitted by a laser selected from a blue laser emitting radiation having a wavelength of in the blue light range, such as 447 nm, a green laser emitting radiation having a wavelength of in the green light range, such as 532 nm and a red laser emitting radiation having a wavelength of in the red light range, such as 671 nm.

12. The process according to Claim 11, **characterized in that** the laser engraving is conducted by use of at least two electromagnetic radiations of wavelengths λ_{L1} and λ_{L2} emitted by a laser selected from radiation emitted by a blue laser emitting radiation having a wavelength in the blue light range, such as 447 nm, a green laser emitting radiation having a wavelength in the green light range, such as 532 nm, and a red laser emitting radiation having a wavelength in the red light range, such as 671 nm, wherein, in case of the two-step engraving comprising consecutive separate steps conducted by use of two different electromagnetic radiations λ_{L1} and λ_{L2} emitted by a laser, wherein λ_{L1}≠λ_{L2} and wherein each one of λ_{L1} and λ_{L2} is selected from radiation emitted by a blue laser emitting radiation having a wavelength in the blue light range, such as 447 nm, a green laser emitting radiation having a wavelength in the green light range, such as 532 nm, and a red laser emitting radiation having a wavelength in the red light range, such as 671 nm, preferably the laser engraving is conducted by use of at least three electromagnetic radiations of wavelengths λL₁, λ_{L2} and λ_{L3} emitted by a laser selected from radiation emitted by a blue laser emitting radiation having a wavelength in the blue light range, such as 447 nm, a green laser emitting radiation having a wavelength in the green light range, such as 532 nm, and a red laser emitting radiation having a wavelength in the red light range, such as 671 nm, wherein, in case of the three-step engraving comprising consecutive separate steps conducted by use of three different electromagnetic radiations λ_{L1}, λ_{L2} and λ_{L3}, wherein λ_{L1}≠λ_{L2}≠λ_{L3}, emitted by a laser, wherein each one of λ_{L1}, λ_{L2} and λ_{L3} is selected from radiation emitted by a blue laser emitting radiation having a wavelength in the blue light range, such as 447 nm, a green laser emitting radiation having a wavelength in the green light range, such as 532 nm, and a red laser emitting radiation having a wavelength in the red light range, such as 671 nm.

13. A system designed to be used as a security or identification feature of an object marked with the system, comprising a substrate and a security element applied onto a substrate visible both in the range of the visible light wavelengths and in ultraviolet radiation, **characterized in that** the security element is made by use of the at least one ink formulation composition as defined in any of Claims 1-5 to provide a graphic composition of a multicolour picture in the security element visible both in the visible spectrum (VIS) wavelengths and in the ultraviolet light (UV) wavelengths.

14. The system according to Claim 13, **characterized in that** the system additionally comprises a graphic marking created by engraving the security element by electromagnetic radiation of at least one wavelength λ_{L} emitted by a laser, preferably at least two different electromagnetic radiations of lengths λ_{L1} and X_{L2}, and most preferably three different electromagnetic radiations of lengths λ_{L1}, λ_{L2} and λ_{L3}, wherein the wavelength λ_{L1} of electromagnetic radiation is different from the wavelength λ_{L2} of electromagnetic radiation (λ_{L1} ≠ λ_{L2}), and the wavelength λ_{L3} of electromagnetic radiation is different both from the wavelength λ_{L1} of electromagnetic radiation, as well as the wavelength λ_{L2} of electromagnetic radiation (λ_{L1} ≠ λ_{L2}≠ λ_{L3}).

15. The system according to Claim 14, **characterized in that** the graphic marking created by engraving the security element by electromagnetic radiation is obtained by use of two different electromagnetic radiations λ_{L1} and λ_{L2} emitted by a laser, wherein λ_{L1}≠λ_{L2} and wherein each one of λ_{L1} and λ_{L2} is selected from radiation emitted by a blue laser emitting radiation having a wavelength in the blue light range, such as 447 nm, a green laser emitting radiation having a wavelength in the green light range, such as 532 nm, and a red laser emitting radiation having a wavelength in the red light range, such as 671 nm.

16. The system according to Claim 14, **characterized in that** the graphic marking created by engraving the security element by electromagnetic radiation is obtained by use of three different electromagnetic radiations λ_{L1}, λ_{L2} and λ_{L3} emitted by a laser, wherein λ_{L1}≠λ_{L2}≠λ_{L3} and wherein each one of λ_{L1}, λ_{L2} and λ_{L3} is selected from radiation emitted by a blue laser emitting radiation having a wavelength in the blue light range, such as 447 nm, a green laser emitting radiation having a wavelength in the green light range, such as 532 nm, and a red laser emitting radiation having a wavelength in the red light range, such as 671 nm.
